# EUROPÄISCHE PATENTSCHRIFT

(11) **EP 4 585 398 B1**
(45) Veröffentlichungstag und Bekanntmachung des Hinweises auf die Patenterteilung: **07.10.2026**
(21) Anmeldenummer: 25151723.1
(22) Anmeldetag: 14.01.2025
(51) Int. Cl.: B29C 49/78, B29C 49/06, B29C 49/64, B29C 49/02, B29K 67/00, B29L 31/00, G01N 21/90

(54) **VORRICHTUNG UND VERFAHREN ZUM HERSTELLEN VON KUNSTSTOFFVORFORMLINGEN MIT STEUERUNG DER HERSTELLUNGSEINHEITEN IN ABHÄNGIGKEIT VON INSPEKTIONSERGEBNISSEN**
DEVICE AND METHOD FOR PRODUCING PLASTIC PREFORM WITH CONTROL OF THE PRODUCTION UNITS IN DEPENDENCE ON INSPECTION RESULTS
DISPOSITIF ET PROCÉDÉ DE FABRICATION D'UNE PRÉFORME EN PLASTIQUE AVEC CONTRÔLE DES UNITÉS DE FABRICATION EN FONCTION DES RÉSULTATS D'INSPECTION

(30) Priorität: 15.01.2024 DE 102024101049
(43) Veröffentlichungstag der Anmeldung: 16.07.2025
(73) Patentinhaber: Krones AG, 93073 Neutraubling (DE)
(72) Erfinder: Schober, Stefan, 93073 Neutraubling (DE); Wuensche, Dieter, 93073 Neutraubling (DE); Geltinger, Florian, 93073 Neutraubling (DE); Niedermeier, Anton, 93073 Neutraubling (DE); Roth, Andreas, 93073 Neutraubling (DE)
(74) Vertreter: Hannke Bittner & Partner mbB Regensburg

(56) Entgegenhaltungen:
- US-A1- 2015 037 518
- US-A1- 2015 321 404
- US-A1- 2019 168 434
- US-A1- 2023 124 802

## Beschreibung

Die vorliegende Erfindung bezieht sich auf eine Vorrichtung und ein Verfahren zum Herstellen von Kunststoffbehältnissen und insbesondere Kunststoffflaschen. Aus dem Stand der Technik sind zahlreiche solcher Vorrichtungen und Verfahren bekannt. Gattungsgemäße Vorrichtungen und Verfahren sind in den Patentschriften US2015/321404A1, US2023/124802A1, US2015/037518A1 und US2019/168434A1 beschrieben.

Üblicherweise werden dabei sogenannte Kunststoffvorformlinge erwärmt und von einer Umformungseinrichtung wie etwa einer Blasformmaschine, insbesondere einer Streckblasmaschine zu den Kunststoffbehältnissen umgeformt und insbesondere expandiert. In jüngerer Zeit sind auch Vorrichtungen und Verfahren bekannt geworden, bei denen auch die Kunststoffvorformlinge selbst hergestellt werden, beispielsweise mittels Spritzgießmaschinen und dann umgeformt werden.

Dies kann den Vorteil bieten, dass eine geringere Erwärmung der Kunststoffvorformlinge nötig ist, um diese dann zu expandieren, weil diese bereits erwärmt aus dem Herstellungsprozess gelangen. Allerdings erfordern derartige Vorrichtungen und Verfahren eine genauere Überwachung der Kunststoffvorformlinge, damit es auch bei der Herstellung der Kunststoffbehältnissen zu weniger Fehlern bzw. weniger Ausschuss kommt.

Aus der DE 10 2009 011 269 B3 sind ein Verfahren und eine Vorrichtung zur Aussonderung von Rückstellmustern aus einem Herstellungsprozess von übereinstimmenden Formteilen bekannt.

Die DE 600 28 756 T2 beschreibt eine Methode und eine Vorrichtung zur Handhabung von ausgeworfenen Spritzgussteilen.

Die DE 10 2018 102 299 A1 beschreibt ein Verfahren und eine Anordnung zur Steuerung mindestens eines Prozessparameters einer Spritzgießmaschine
Der vorliegenden Erfindung liegt die Aufgabe zugrunde, die Automatisierung und/oder die Fehlerbearbeitung derartiger Anlagen zu verbessern. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Herstellen von Kunststoffvorvormlingen weist eine Herstellungseinrichtung auf, welche zum Herstellen von Kunststoffvorformlingen geeignet und bestimmt ist, wobei die Herstellungseinrichtung eine Vielzahl von Herstellungseinheiten zum Herstellen der Kunststoffvorformlinge aufweist und weiterhin eine Transportvorrichtung vorgesehen ist, welche dazu geeignet und bestimmt ist, die von der Herstellungseinrichtung hergestellten Kunststoffvorformlinge zu transportieren, wobei die Vorrichtung (1) eine Steuerungseinrichtung zum Steuern der Herstellungseinrichtung und/oder der Herstellungseinheiten aufweist .

Erfindungsgemäß weist die Vorrichtung eine erste Inspektionseinrichtung auf, welche zur Inspektion wenigstens eines Bereichs der von der Herstellungseinrichtung hergestellten Kunststoffvorformlinge geeignet und bestimmt ist, wobei die Inspektionseinrichtung dazu geeignet und bestimmt ist, wenigstens einen Wert auszugeben, der für eine physikalische Eigenschaft der Kunststoffvorformlinge charakteristisch ist wobei die Vorrichtung eine Zuordnungseinrichtung aufweist, welche dazu geeignet ist, jedem inspizierten Kunststoffvorformling diejenige Herstellungseinheit zuzuordnen, welche diesen Kunststoffvorformling hergestellt hat und wobei die Steuerungseinrichtung dazu geeignet und bestimmt ist, die Herstellungseinrichtung und insbesondere die Herstellungseinheiten in Abhängigkeit von diesem Wert zu steuern.

Bei einer bevorzugten Ausführungsform ist die Inspektionseinrichtung dazu geeignet und bestimmt, mehrere Werte auszugeben, welche für die inspizierten Kunststoffvorformlinge charakteristisch sind, insbesondere die Qualität des Mündungskopfes. Ausgegeben werden bevorzugt Werte zu vollständiger Ausformung wie insbesondere aber nicht ausschließlich (ShortShot), Ovalität, Fehlerfreiheit der Mündungsdichtfläche, Fehlerfreiheit des Tragrings.

Bevorzugt weist die Vorrichtung eine Entnahmeeinrichtung auf, welche die Kunststoffvorformlinge von der Herstellungseinrichtung abtransportiert. Dabei kann diese Entnahmeeinrichtung einen Bestandteil der oben erwähnten Transporteinrichtung bilden.

Bevorzugt weist die Entnahmeeinrichtung einen Träger auf, der zur Aufnahme einer Vielzahl von Kunststoffvorformlingen geeignet und bestimmt ist, wobei diese von dem aufgenommenen Kunststoffvorformlinge bevorzugt eine vorgegebene und konstante Position zueinander haben.

Bei einer bevorzugten Ausführungsform weisen die Herstellungseinheiten jeweils Kavitäten zur Formung der Kunststoffvorformlinge und/oder Formwerkzeuge zur Formung der Kunststoffvorformlinge auf.

Bei einer weiteren bevorzugten Ausführungsform ist wenigstens ein Parameter der Herstellungseinrichtung und/oder der Herstellungseinheiten steuerbar, wobei dieser Parameter aus einer Gruppe von Parametern ausgewählt ist, welche Nadelverschlusszeiten, Einspritzverzögerung/ -timing, Einspritzprofile, Druckprofil, Nachdruck (insbesondere Druckprofil und Zeit), Kühlzeit, Drehzahl der Schnecke, Staudruck der Schmelze, Position und Druck der Schließeinheit (z.B. Spritzprägen) sowie Temperaturen von Kavität und/oder einer Düse (ggf. Individuell pro Düse), Hotrunner in einzelnen Zonen, Heizzonen der Plastifizierung enthält].

Bevorzugt ist dieser wenigstens eine Parameter unter Berücksichtigung des von der Inspektionseinrichtung erfassten Wertes steuerbar.

Bei einer weiteren vorteilhaften Ausführungsform ist die Steuerungseinrichtung zum Steuern der Herstellungseinrichtung eine Regelungseinrichtung, welche dazu geeignet und bestimmt ist die Herstellungseinrichtung und insbesondere die Herstellungseinheiten in Abhängigkeit von diesem wenigstens einen Wert zu regeln.

Bevorzugt liegt damit ein (insbesondere geschlossener) Regelkreis vor, der eine Regelung der Herstellungseinheiten und insbesondere der obigen Parameter in Abhängigkeit von einem Inspektionsergebnis der oben erwähnten ersten Inspektionseinrichtung (und bevorzugt auch in Abhängigkeit von einem Inspektionsergebnis der unten genauer beschriebenen zweiten Inspektionseinrichtung) ermöglicht.

Bei einer weiteren vorteilhaften Ausführungsform weist die Vorrichtung eine Kühleinrichtung zum Kühlen der von den Herstellungseinheiten hergestellten Kunststoffvorformlinge auf.

Bevorzugt ist die erste Inspektionseinrichtung zwischen der Herstellungseinrichtung und der Kühleinrichtung angeordnet. Es wäre jedoch auch möglich, dass die erste Inspektionseinrichtung nach der Kühleinrichtung angeordnet ist.

Bei einer weiteren vorteilhaften Ausführungsform weist die erste Inspektionseinrichtung eine Bildaufnahmeeinrichtung auf, welche dazu geeignet und bestimmt ist ein ortsaufgelöstes Bild einer Vielzahl von Kunststoffvorformlingen aufzunehmen. Besonders bevorzugt handelt es sich bei der ersten Inspektionseinrichtung um eine Wärmebildkamera und/oder die erste Inspektionseinrichtung ist dazu geeignet und bestimmt ortsaufgelöste Wärmebilder der Kunststoffvorformlinge oder wenigstens eines Bereichs der Kunststoffvorformlinge zu erfassen.

Bevorzugt liegt ein von der Wärmebildkamera erfassbarer Wellenlängenbereich zwischen 300nm und 15.000nm und bevorzugt zwischen 5000nm und 12000 und besonders bevorzugt zwischen 8000nm und 12000nm.

Bevorzugt weist die Vorrichtung eine Auswerteeinrichtung auf, welche dazu geeignet und bestimmt ist, die von der Inspektionseinrichtung aufgenommenen Bilder auszuwerten. Bevorzugt ist dabei diese Auswerteeinrichtung dazu geeignet und bestimmt, das von der Bildaufnahmeeinrichtung aufgenommene Bild hinsichtlich jedes einzelnen der in dem Bild erfassten Kunststoffvorformlinge auszuwerten.

Bei einer weiteren vorteilhaften Ausführungsform weist die Vorrichtung eine zweite Inspektionseinrichtung aufweist, welche dazu geeignet und bestimmt ist die Kunststoffvorformlinge zu inspizieren und welche bevorzugt zwischen oben erwähnten Kühleinrichtung und wenigstens einer nachfolgenden Einrichtung wie etwa einer Umformungseinrichtung (130) angeordnet ist.

Bevorzugt ist wenigstens eine Inspektionseinrichtung und bevorzugt sind beide Inspektionseinrichtungen dazu geeignet und bestimmt, wenigstens einen und bevorzugt eine Vielzahl von Werten zu erfassen und/oder auszugeben, welche für physikalische Eigenschaften der Kunststoffvorformlinge charakteristisch sind.

Bevorzugt ist die oben erwähnte Zuordnungseinrichtung dazu geeignet und bestimmt, jedem von der zweiten Inspektionseinrichtung inspizierten Kunststoffvorformling diejenige Herstellungseinheit zuzuordnen, welche diesen Kunststoffvorformling hergestellt hat.

Bevorzugt ist die Steuerungseinrichtung dazu geeignet und bestimmt, die Herstellungseinrichtung und insbesondere die Herstellungseinheiten in Abhängigkeit von diesem (von der zweiten Inspektionseinrichtung erfassten) Wert zu steuern.

Bevorzugt wird unter einer Inspektionseinrichtung eine Inspektionseinrichtung verstanden, welche dazu geeignet und bestimmt ist, die Kunststoffvorformlinge nach ihrer Herstellung und insbesondere unmittelbar nach ihrer Herstellung jedoch noch vor deren Kühlung (ggfs. aber auch nach deren Kühlung) zu inspizieren. Zu diesem Zweck kann ein Träger vorgesehen sein, welcher eine Vielzahl von Kunststoffvorformlingen (unmittelbar) nach ihrer Herstellung trägt so dass die Bildaufnahmeeinrichtung ein Bild von den von dem Träger gehaltenen oder getragenen Kunststoffvorformlingen (insbesondere wenigstens eines Bereiches dieser Kunststoffvorformlinge) aufnehmen kann.

Bevorzugt ist die erste Inspektionseinrichtung in die Herstellungseinrichtung integriert.
Bei einer weiteren bevorzugten Ausführungsform ist die Inspektionseinrichtung derart ausgeführt, dass sie eine Mündungsinspektion der Kunststoffvorformlinge direkt an einer Entnahmeeinrichtung aufweist bzw. ermöglicht, welche die hergestellten Kunststoffvorformlinge von der Herstellungseinrichtung entnimmt.

Bei einer weiteren bevorzugten Ausführungsform weist die Vorrichtung eine Speichereinrichtung auf, in der eine Vielzahl von für die Kunststoffvorformlinge charakteristischen Daten abgelegt ist. So können in dieser Speichereinrichtung beispielsweise Referenzbilder von Kunststoffvorformlingen abgelegt sein, beispielsweise von ordnungsgemäßen Kunststoffvorformlingen. Bei dieser Speichereinrichtung kann es sich um eine interne Speichereinrichtung oder etwa auch um eine Cloud handeln.

Bevorzugt ist eine Vergleichseinrichtung vorgesehen, welche diese Daten mit von der wenigstens einen Inspektionseinrichtung erfassten Daten vergleicht. Auf diese Weise kann etwa im Rahmen einer Bildauswertung darauf geschlossen werden, ob die jeweiligen Kunststoffvorformlinge ordnungsgemäß sind. Dabei kann bevorzugt zum Zwecke dieser Auswertung oder aber dieses Vergleiches eine künstliche Intelligenz (KI) verwendet werden.

Bei einer bevorzugten Ausführungsformen weist die Transporteinrichtung eine Entnahmeeinrichtung auf, welche dazu geeignet und bestimmt ist, Gruppen von hergestellten Kunststoffvorformlingen von der Herstellungseinrichtung zu übernehmen.

Bei einer weiteren bevorzugten Ausführungsformen weist die Transporteinrichtung einen beweglichen Träger auf, der zum Halten einer Vielzahl von Kunststoffvorformlingen ausgebildet ist.

Bevorzugt handelt es sich bei dem ersten Bereich der Kunststoffvorformlinge um einen Mündungsbereich der Kunststoffvorformlinge. Bevorzugt weist dieser Mündungsbereich ein Gewinde und insbesondere ein Außengewinde auf.

Bevorzugt weist die Vorrichtung eine Umformungseinrichtung zum Umformen der Kunststoffvorformlinge zu Kunststoffbehältnissen und insbesondere Kunststoffflaschen auf. Diese Umformungseinrichtung kann dabei bevorzugt einer unten genauer beschriebenen Anordnung zum Herstellen von Kunststoffbehältnissen sein.

Bei einer weiteren bevorzugten Ausführungsformen weist die Umformungseinrichtung einen bewegbaren und insbesondere einen drehbaren Träger auf, wobei bevorzugt die Umformungsstationen an diesem Träger angeordnet sind. Besonders bevorzugt weist jede Umformungsstationen eine Blasform auf und bevorzugt weist jede dieser Umformungsstationen einen stangenartigen Körper und insbesondere eine sogenannte Reckstange auf, die zum Dehnen der Kunststoffvorformlinge in diese Kunststoffvorformlinge einführbar ist.

Bei der weiteren bevorzugten Ausführungsformen weist jede Umformungsstation eine Beaufschlagungseinrichtung zum Beaufschlagen der Kunststoffvorformlinge mit einem gasförmigen Medium auf und bevorzugt auch eine Ventilanordnung wie ein Ventilblock. Diese Ventilanordnung weist dabei bevorzugt eine Vielzahl von Ventilen auf, welche die Druckbeauftragung der Kunststoffvorformlinge steuern. Die Beaufschlagungseinrichtung weist bevorzugt eine sog. Blasdüse auf, welche an eine Mündung der Kunststoffvorformlinge anlegbar ist.

Besonders bevorzugt handelt es sich bei der Herstellungseinrichtung um eine Spritzgießmaschine. Besonders bevorzugt weist diese Spritzgießmaschine wenigstens 10, bevorzugt wenigstens 20 und besonders bevorzugt wenigstens 30 Herstellungseinheiten auf.

Besonders bevorzugt weist die Herstellungseinrichtung und insbesondere die Spritzgießmaschine höchstens 200, bevorzugt höchstens 180, bevorzugt höchstens 160 Herstellungseinheiten auf.

Dabei ist es möglich, dass die Herstellungseinheiten an einem gemeinsamen Träger angeordnet sind. Bevorzugt ist jede dieser Herstellungseinheiten dazu geeignet und bestimmt, genau einen Kunststoffvorformling herzustellen. Bevorzugt handelt es sich bei den Herstellungseinheiten jeweils um Formwerkzeuge.

Bei einer weiteren bevorzugten Ausführungsform weisen die Herstellungseinheiten jeweils Markierungseinrichtungen auf, welche dazu geeignet und bestimmt sind, an den herzustellenden Kunststoffvorformlingen Markierungen anzubringen, wobei bevorzugt diese Markierungen zumindest für die jeweilige Herstellungseinheit charakteristisch sind.

Bevorzugt ist durch eine eindeutige Lage der Kunststoffvorformlinge in der Entnahmeeinrichtung bzw. im TakeOff / Picker eine Zuordnung des Kunststoffvorformlings auf die Kavität des Werkzeugs bzw. der Herstellungseinheit möglich.

Bevorzugt ist es möglich eine Auswertung und/oder Übergabe der erkannten Kavitäten bzw. Herstellungseinheiten bzw. Formwerkzeuge an die Steuerungseinrichtung der Herstellungseinrichtung weiterzuleiten, um Trends / Auswertungen zu erkennen und bevorzugt auch zu visualisieren.

Die Bildaufnahmeeinrichtung der ersten Inspektionseinrichtung kann dabei (ein)geschwenkt werden, um das oder die Bilder aufzunehmen. Auch wäre es möglich, dass die Kunststoffvorformlinge neben und/oder über der ersten Inspektionseinrichtung und/oder einer unten genauer beschriebenen zweiten Inspektionseinrichtung transportiert werden.

Bei einer weiteren vorteilhaften Ausführungsform weist die Vorrichtung eine Zuordnungseinrichtung auf, welche dazu geeignet und bestimmt ist, jedem inspizierten Kunststoffvorformling diejenige Umformungsstation zuzuordnen, welche diesen Kunststoffvorformling zu einem Kunststoffbehältnis umformen wird.

Besonders bevorzugt weist die Vorrichtung auch eine Steuerungseinrichtung zum Steuern der Umformungseinrichtung auf, wobei diese Steuerungseinrichtung dazu geeignet und bestimmt ist, jede Umformungsstationen separat und/oder unabhängig von anderen Umformungsstationen zu steuern. Besonders bevorzugt ist diese Steuerungseinrichtung dazu geeignet und bestimmt, die Umformungsstationen auch in Abhängigkeit von einem Wert zu steuern, der durch die Inspektion der Kunststoffvorformlinge mit der ersten Inspektionseinrichtung gewonnen wird und/oder der für ein Inspektionsergebnis einer Inspektion der Kunststoffvorformlinge mit der ersten Inspektionseinrichtung charakteristisch ist.

Bevorzugt ist die erste Inspektionseinrichtung dazu geeignet und bestimmt mehrere Kunststoffvorformlinge zu inspizieren und/oder für jeden einzelnen der inspizierten Kunststoffvorformlinge wenigstens einen Wert auszugeben, der für diesen einzelnen Kunststoffvorformling charakteristisch ist.

So kann die Inspektionseinrichtung beispielsweise ein Bild einer Vielzahl von Kunststoffvorformlingen aufnehmen und aus diesem Bild kann für jeden einzelnen dieser Vielzahl von Kunststoffvorformlingen wenigstens ein Wert ausgegeben werden, welcher für diesen betreffenden Kunststoffvorformling und/oder die Inspektion dieses betreffenden Kunststoffvorformlings charakteristisch ist.

Bei einer weiteren bevorzugten Ausführungsform weist die Inspektionseinrichtung eine Auswerteeinrichtung auf, welche zur Auswertung der von der Inspektionseinrichtung aufgenommenen Bilder geeignet und bestimmt ist. Besonders bevorzugt ist diese Auswerteeinrichtung dazu geeignet und bestimmt, um von einem von der Bildaufnahmeeinrichtung aufgenommenen Bild, welches eine Vielzahl von Kunststoffvorformlingen zeigt, einzelne Kunststoffvorformlinge zu individualisieren und bevorzugt auch, für diese Kunststoffvorformlinge charakteristische Werte zu bestimmen.

Bei einer weiteren vertrauten Ausführungsformen ist die Transporteinrichtung dazu geeignet und bestimmt, die Kunststoffvorformlinge vereinzelt von der Herstellungseinrichtung abzutransportieren und insbesondere zu der Umformungseinrichtung zu transportieren. Unter vereinzelt wird dabei verstanden, dass die Kunststoffvorformlinge individuell transportiert werden und daher auch jeder einzelne Kunststoffvorformling individualisierbar ist. So kann beispielsweise diese Transporteinrichtung wenigstens ein oder bevorzugt mehrere Transporträder und/oder Transportketten aufweisen. Bevorzugt ist die Transporteinrichtung derart ausgebildet, dass eine vorgegebene Reihenfolge der transportierten Kunststoffvorformlinge bestehen bleibt.

Ein vereinzelter Transport ist jedoch auch gegeben, wenn die Kunststoffvorformlinge an einem gemeinsamen Träger transportiert werden, dabei jedoch die einzelnen Kunststoffvorformlinge eine definierte Position zueinander aufweisen, die etwa durch die Gestalt des Trägers gegeben ist, etwa wenn der Träger eine Vielzahl von Aufnahmemitteln zum Halten jeweils einzelner Kunststoffvorformlinge aufweist. Bevorzugt weist die Transporteinrichtung wenigstens eine Transporteinheit auf, welche die Kunststoffvorformlinge einreihig transportiert. Bevorzugt weist die Transporteinrichtung wenigstens eine Transporteinheit auf, welche die Kunststoffvorformlinge als Array transportiert, wie insbesondere den oben genannten Transportträger, der eine Vielzahl von Kunststoffvorformlingen aufnimmt.

Ein nicht vereinzelter Transport liegt beispielsweise vor, wenn eine Vielzahl von Kunststoffvorformlingen in ein gemeinsames Aufnahmebehältnis verbracht werden, in welchem diese in willkürlicher Positionierung zueinander befindlich sind.

Durch diese Vereinzelung ist eine Zuordnung einzelner inspizierter Kunststoffvorformlinge auch zu Umformungsstationen oder Herstellungseinheiten möglich.

Bei einer weiteren Verlauf Ausführungsformen weist die Transporteinrichtung einen Träger auf, der zur Aufnahme einer Vielzahl von Kunststoffvorformlingen geeignet ist.

Bevorzugt weist die Transporteinrichtung einen Träger auf, der zur Aufnahme einer Vielzahl von Kunststoffvorformlingen mit jeweils gleicher Ausrichtung geeignet ist. Besonders bevorzugt werden die Kunststoffvorformlinge von dem Träger in zueinander paralleler Ausrichtung transportiert.

Besonders bevorzugt ist dieser Träger im Rahmen der Transporteinrichtung in zwei voneinander unabhängige und insbesondere in zwei zueinander senkrechte Richtungen transportierbar.

Bevorzugt weist die Transporteinrichtung eine Entnahmeeinrichtung auf, welche dazu geeignet und bestimmt ist, die Kunststoffvorformlinge - bevorzugt von der Kühleinrichtung - zu übernehmen. Bevorzugt ist diese Entnahmeeinrichtung auch dazu geeignet und bestimmt, einzelne Kunststoffvorformlinge zu übernehmen und weiterhin einem nachfolgenden Transportpfad zuzuführen. Weiterhin ist bevorzugt diese Entnahmeeinrichtung auch dazu geeignet und bestimmt, einzelne Kunststoffvorformlinge zu übernehmen und/oder aus dem Transportpfad auszuleiten.

Bevorzugt ist die zweite Inspektionseinrichtung dazu geeignet und bestimmt die gekühlten Kunststoffvorformlinge zu inspizieren und/oder die Kunststoffvorformlinge während und/oder nach ihrer Kühlung zu inspizieren.

Bei einer weiteren bevorzugten Ausführungsform weist die Vorrichtung wenigstens eine Beleuchtungseinrichtung auf, welche dazu geeignet und bestimmt ist, von der ersten Inspektionseinrichtung und/oder von der zweiten Inspektionseinrichtung inspizierte Kunststoffvorformlinge zu beleuchten. Dabei ist es auch möglich, dass die Kunststoffvorformlinge neben und/oder unterhalb und/oder oberhalb dieser Beleuchtungseinrichtung positioniert werden, um die Kunststoffvorformlinge zu inspizieren.

Bevorzugt ist diese zweite Inspektionseinrichtung dazu geeignet und bestimmt, einen Grundkörper der Kunststoffvorformlinge zu inspizieren.

Bei einer weiteren bevorzugten Ausführungsform weist die Vorrichtung eine weitere Zuordnungseinrichtung auf, welche dazu geeignet ist, jedem von der zweiten Inspektionseinrichtung inspizierten Kunststoffvorformling diejenige Umformungsstation zuzuordnen, welche diesen Kunststoffvorformling zu einem Kunststoffbehältnis umformen wird.

Bevorzugt ist die oben erwähnte Steuerungseinrichtung zum Steuern der Herstellungseinrichtung dazu geeignet und bestimmt, die Herstellungseinheiten unter Verwendung von wenigstens einem Wert zu steuern, der für ein Inspektionsergebnis der Inspektion der Kunststoffvorformlinge mit der zweiten Inspektionseinrichtung charakteristisch ist.

Besonders bevorzugt ist die oben erwähnte Steuerungseinrichtung zum Steuern der Umformungseinrichtung dazu geeignet und bestimmt, die Umformungsstationen auch in Abhängigkeit von einem Wert zu steuern, der durch die Inspektion der Kunststoffvorformlinge mit der zweiten Inspektionseinrichtung gewonnen wird und/oder der für ein Inspektionsergebnis einer Inspektion der Kunststoffvorformlinge mit der zweiten Inspektionseinrichtung charakteristisch ist.

Bevorzugt ist die zweite Inspektionseinrichtung dazu geeignet und bestimmt mehrere Kunststoffvorformlinge zu inspizieren und/oder für jeden einzelnen der inspizierten Kunststoffvorformlinge wenigstens einen Wert auszugeben, der für diesen einzelnen Kunststoffvorformling charakteristisch ist.

So kann die zweite Inspektionseinrichtung beispielsweise ein Bild einer Vielzahl von Kunststoffvorformlingen aufnehmen und aus diesem Bild kann für jeden einzelnen dieser Vielzahl von Kunststoffvorformlingen wenigstens ein Wert ausgegeben werden, welcher für diesen betreffenden Kunststoffvorformling und/oder die Inspektion dieses betreffenden Kunststoffvorformlings charakteristisch ist.

Bei einer weiteren bevorzugten Ausführungsform weist die zweite Inspektionseinrichtung eine Auswerteeinrichtung auf, welche zur Auswertung der von der Inspektionseinrichtung aufgenommenen Bilder geeignet und bestimmt ist. Besonders bevorzugt ist diese Auswerteeinrichtung dazu geeignet und bestimmt, um von einem von der Bildaufnahmeeinrichtung aufgenommenen Bild, welches eine Vielzahl von Kunststoffvorformlingen zeigt, einzelne Kunststoffvorformlinge zu individualisieren.

Bei dieser Ausgestaltung ist vorgesehen, dass wenigstens zwei Inspektionseinrichtungen vorhanden sind, welche die Kunststoffvorformlinge inspizieren. Auf diese Weise kann auch eine Beziehung eines Zustands der Kunststoffvorformlinge vor und nach der Kühlung der Kunststoffvorformlinge hergestellt werden.

Dabei ist es auch möglich, dass die beiden Inspektionseinrichtungen unterschiedliche Bereiche des oder der Kunststoffvorformlinge inspizieren. Bevorzugt inspiziert die erste Inspektionseinrichtung einen Mündungsbereich der Kunststoffvorformlinge, während die zweite Inspektionseinrichtung einen Grundkörper der Kunststoffvorformlinge inspiziert. Bevorzugt handelt es sich bei dem Mündungsbereich der Kunststoffvorformlinge um einen Bereich der Kunststoffvorformlinge, welcher nicht von der Umformungseinrichtung umgeformt wird, wohingegen es sich bei dem Grundkörper der Kunststoffvorformlinge um einen Bereich der Kunststoffvorformlinge handelt, der von der Umformungseinrichtung umgeformt und insbesondere expandiert wird.

Bei einer weiteren vorteilhaften Ausführungsformen ist wenigstens eine Inspektionseinrichtung und sind bevorzugt die erste und die zweite Inspektionseinrichtung dazu geeignet und bestimmt, wenigstens einen und bevorzugt eine Vielzahl von Werten zu erfassen, die für physikalische Eigenschaften der Kunststoffvorformlinge charakteristisch sind.

Besonders bevorzugt sind diese Eigenschaften aus einer Gruppe von Eigenschaften ausgewählt, welche eine Geometrie der Kunststoffvorformlinge, einen Querschnitt der Kunststoffvorformlinge, eine Länge der Kunststoffvorformlinge, eine Farbe der Kunststoffvorformlinge, eine Transparenz der Kunststoffvorformlinge, einen Feuchtewert der Kunststoffvorformlinge, einen IV-Wert (intrinsische Viskosität) der Kunststoffvorformlinge , eine Temperatur der Kunststoffvorformlinge, Schäden an den Kunststoffvorformlingen und dergleichen enthält.

Bei einer weiteren bevorzugten Ausführungsformen ist wenigstens eine Inspektionseinrichtung dazu geeignet und bestimmt, die Kunststoffvorformlinge während deren Bewegung zu inspizieren. Bevorzugt sind sowohl die erste als auch die zweite Inspektionseinrichtung dazu geeignet und bestimmt, die Kunststoffvorformlinge während ihrer Bewegung zu inspizieren.

Bei einer weiteren vorteilhaften Ausführungsformen weist die Vorrichtung eine Erwärmungseinrichtung zum Erwärmen der von der Herstellungseinrichtung hergestellten Kunststoffvorformlinge auf. Bei dieser Erwärmungseinrichtung kann sich beispielsweise um einen Infrarotoder Mikrowellenofen handeln.

Besonders bevorzugt ist diese Erwärmungseinrichtung zwischen der Kühleinrichtung und Umformungseinrichtung angeordnet. Besonders bevorzugt weist auch die Erwärmungseinrichtung eine Transporteinrichtung auf, welche die Kunststoffvorformlinge vereinzelt transportiert. Weiterhin weist diese Erwärmungseinrichtung bevorzugt auch eine Dreheinrichtung zum Drehen der Kunststoffvorformlinge bezüglich deren Achse während der Erwärmung auf.

Bei einer weiteren vorteilhaften Ausführungsformen weist die Vorrichtung eine Ausleiteinrichtung auf, welche dazu geeignet und bestimmt ist, einzelne Kunststoffvorformlinge aus dem Transportpfad der Kunststoffvorformlinge zwischen der Herstellungseinrichtung und der Umformungseinrichtung auszuschleusen bzw. auszuleiten. Dabei wird unter einem Ausleiten verstanden, dass solche Kunststoffvorformlinge nicht mehr dem Umformungsprozess zugeführt werden.

Besonders bevorzugt ist diese Ausleiteinrichtung nach der zweiten Inspektionseinrichtung und/oder vor der Umformungseinrichtung angeordnet. Besonders bevorzugt ist diese Ausleiteinrichtung dazu geeignet und bestimmt, einzelne Kunststoffvorformlinge in Reaktion auf ein Inspektionsergebnis wenigstens einer der Inspektionseinrichtungen auszuleiten. Es wäre jedoch auch denkbar, dass eine dritte Inspektionseinrichtung vorgesehen, ist, und die Ausleiteinrichtung einzelne Kunststoffvorformlinge unter Berücksichtigung eines Inspektionsergebnisses dieser dritten Inspektionseinrichtung ausleitet.

Bei einer weiteren vorteilhaften Ausführungsform weist die Vorrichtung eine Lückenschließeinrichtung auf, welche durch eine Ausleitung einzelner Kunststoffvorformlinge entstandene Lücken erschließt. Diese Lückenschließeinrichtung kann dabei einen Puffer aufweisen, der bestehende Lücken wieder befüllt.

Bei einer weiteren vorteilhaften Ausführungsform weist die Vorrichtung und insbesondere die Transporteinrichtung eine Wendeeinrichtung auf, welche eine Ausrichtung von transportierten Kunststoffvorformlingen ändert.

Bevorzugt weist die Vorrichtung einen Träger auf, an dem eine Vielzahl von Kunststoffvorformlingen nach deren Herstellung angeordnet werden kann und die Wendeeinrichtung ist dazu geeignet und bestimmt, den Träger mit den daran angeordneten Kunststoffvorformlingen zu wenden.

Bevorzugt ist dabei diese Wendeeinrichtung dazu geeignet und bestimmt, die Kunststoffvorformlinge um einen vorgegebenen Winkel zu wenden, bevorzugt um 90°. Bevorzugt ist die Wendeeinrichtung dazu geeignet und bestimmt, die Kunststoffvorformlinge von einer waagrechten Ausrichtung (d.h. einer Ausrichtung in der die Längsrichtungen der Kunststoffvorformlinge waagerecht oder horizontal verlaufen, in einer senkrechte Ausrichtung zu wenden (d.h. eine Ausrichtung, in der die Längsrichtungen der Kunststoffvorformlinge senkrecht oder vertikal ausgerichtet sind.

Bevorzugt ist die erste Inspektionseinrichtung dazu geeignet und bestimmt, ein Bild der Kunststoffvorformlinge in deren waagerechter Ausrichtung aufzunehmen.

Bevorzugt ist die zweite Inspektionseinrichtung dazu geeignet und bestimmt, ein Bild der Kunststoffvorformlinge in deren senkrechter Ausrichtung aufzunehmen.

Bei einer weiteren vorteilhaften Ausführungsform weist die Vorrichtung wenigstens eine Vakuumhaltevorrichtung auf, welche dazu geeignet und bestimmt ist, einzelne Kunststoffvorformlinge unter Verwendung eines Unterdrucks an Haltekörpern zu halten.

Durch diese Vakuumhalteinrichtung ist es möglich, einzelne Kunststoffvorformling von ihren Trägern zu lösen.

Besonders bevorzugt ist jedem Kunststoffvorformling ist eine derartige Vakuumeinrichtung zugeordnet. Es können daher einzelne Kunststoffvorformlinge durch Entfernen des Vakuums von ihren Halteeinrichtungen gelöst werden. Bevorzugt ist die Vakuumeinrichtung dazu geeignet und bestimmt unter Verwendung wenigstens eines Inspektionsergebnisses einer Inspektionseinrichtung einzelne jedoch insbesondere bestimmte Kunststoffvorformlinge von ihren Halterungen zu lösen.

Bevorzugt ist dies Vakuumeinrichtung ein Bestandteil der Ausleiteinrichtung.

Bei einer weiteren vorteilhaften Ausführungsform weist die Vorrichtung eine dritte Inspektionseinrichtung zum Inspizieren der Kunststoffvorformlinge auf, wobei bevorzugt diese dritte Inspektionseinrichtung nach der zweiten Inspektionseinrichtung angeordnet ist.

Diese dritte Inspektionseinrichtung ist insbesondere dazu geeignet und bestimmt, Verunreinigungen der hergestellten Kunststoffvorformlinge (beispielsweise sog. Black specs) zu erfassen.

Die vorliegende Erfindung ist weiterhin auf eine Anordnung zum Herstellen von Kunststoffbehältnissen mit einer Vorrichtung der oben beschriebenen Art und einer Umformungseinrichtung gerichtet, welche die hergestellten Kunststoffvorformlinge zu Kunststoffbehältnissen umformt, wobei weiterhin die Transporteinrichtung dazu geeignet und bestimmt ist, die Kunststoffvorformlinge von der Herstellungseinrichtung zu der Umformungseinrichtung zu transportieren.

Die Umformungseinrichtung wurde bereits oben ausführlich beschrieben.

Die vorliegende Erfindung ist weiterhin auf ein Verfahren zum Herstellen von Kunststoffvorformlingen gerichtet, wobei eine Herstellungseinrichtung Kunststoffvorformlinge herstellt und wobei die Herstellungseinrichtung eine Vielzahl von Herstellungseinheiten aufweist, welche jeweils die Kunststoffvorformlinge herstellen, und wobei eine Transportvorrichtung die von der Herstellungseinrichtung hergestellten Kunststoffvorformlinge transportiert. Weiterhin steuert eine Steuerungseinrichtung die Herstellungseinrichtung und insbesondere die Herstellungeinheiten.

Erfindungsgemäß ist eine erste Inspektionseinrichtung vorgesehen, welche wenigstens einen Bereich der von der Herstellungseinrichtung hergestellten Kunststoffvorformlinge inspiziert, wobei die Inspektionseinrichtung wenigstens einen Wert ausgibt, der für eine physikalische Eigenschaft der Kunststoffvorformlinge charakteristisch ist und wobei die Vorrichtung eine Zuordnungseinrichtung aufweist, welche jedem inspizierten Kunststoffvorformling diejenige Herstellungseinheit zuordnet, welche diesen Kunststoffvorformling hergestellt hat und wobei die Steuerungseinrichtung die Herstellungseinrichtung und insbesondere die Herstellungseinheiten in Abhängigkeit von diesem Wert steuert.

Bevorzugt nimmt diese erste Inspektionseinrichtung (wenigstens) ein ortsaufgelöstes Bild einer Vielzahl und insbesondere jedes einzelnen der transportierten Kunststoffvorformlinge auf (wobei bevorzugt ein einzelnes Bild eine Vielzahl von Kunststoffvorformlingen zeigt). Bei einem bevorzugten Verfahren werden die von der Bildaufnahmeeinrichtung aufgenommenen Kunststoffvorformlinge wenigstens teilweise individuell erfasst. Bevorzugt werden alle Kunststoffvorformlinge individuell erfasst.

Bevorzugt gibt die erste Inspektionseinrichtung eine Vielzahl von Werten auf, wobei jeder dieser Werte für genau einen von der Inspektionseinrichtung aufgenommenen Kunststoffvorformling charakteristisch ist.

Bevorzugt nimmt die erste Inspektionseinrichtung ein Bild der Kunststoffvorformlinge während einer Bewegung der Kunststoffvorformlinge auf.

Bei einer weiteren bevorzugten Verfahren wird wenigstens einem und bevorzugt einer Vielzahl von Kunststoffvorformlingen diejenige Herstellungseinheit zugeordnet, welche diesen Kunststoffvorformling hergestellt hat.

Bei einen weiteren bevorzugten Verfahren wird wenigstens einem von der ersten Inspektionseinrichtung inspizierten Kunststoffvorformling, bevorzugt mehreren von der ersten Inspektionseinrichtung inspizierten Kunststoffvorformlingen und bevorzugt allen von der ersten Inspektionseinrichtung inspizierten Kunststoffvorformlingen jeweils diejenige Umformungsstation zugeordnet, welche diesen Kunststoffvorformling zu einem Kunststoffbehältnissen umformen wird.

Bevorzugt erfolgt der Transport der Kunststoffvorformlinge wenigstens abschnittsweise vereinzelt.

Besonders bevorzugt werden die Kunststoffvorformlinge wenigstens abschnittsweise von einem Aufnahmeträger transportiert, der zur Aufnahme einer Vielzahl der Kunststoffvorformlinge geeignet ist.

Beim weiteren bevorzugten Verfahren werden die Kunststoffvorformlinge nach ihrer Kühlung wieder erwärmt. Insbesondere werden dabei die Grundkörper der Kunststoffvorformlinge erwärmt, sodass diese zu Kunststoffflaschen umgeformt werden können.

Weitere Vorteile und Ausführungsformen ergeben sich aus den beigefügten Zeichnungen:

Darin zeigen:
- Fig. 1: eine grob schematische Darstellung einer erfindungsgemäßen Vorrichtung;
- Fig. 2: eine Darstellung einer Herstellungseinrichtung zum Herstellen von Kunststoffvorformlinge in einer ersten Ansicht;
- Fig. 3: eine weitere Ansicht der in Fig 2 gezeigten Herstellungseinrichtung; und
- Fig. 4: eine Darstellung zur Veranschaulichung des erfindungsgemäßen Verfahrens.

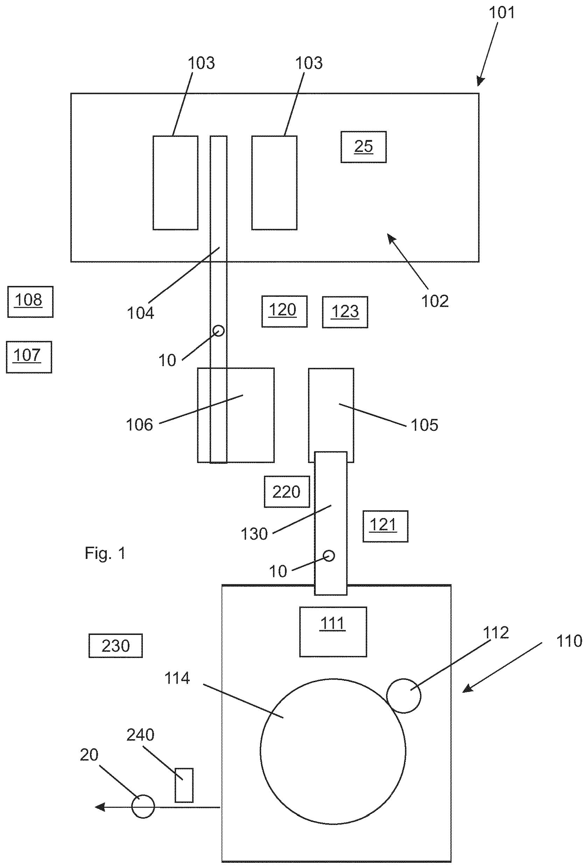

Fig. 1 zeigt eine grob schematische Darstellung einer Vorrichtung 101 zum Herstellen von Kunststoffbehältnissen. Diese Vorrichtung 101 weist eine Herstellungseinrichtung 102 auf, welche Kunststoffvorformlinge 10 herstellt. Bevorzugt handelt es sich bei dieser Herstellungseinrichtung 102 um eine Spritzgießmaschine. Diese Herstellungseinrichtung 102 weist dabei eine Vielzahl von Herstellungseinheiten 103 und insbesondere Formwerkzeugen auf, welche jeweils dazu geeignet und bestimmt sind, einzelne Kunststoffvorformlinge 10 herzustellen.

Das Bezugszeichen 25 kennzeichnet eine Steuerungseinrichtung zum Steuern der Herstellungseinrichtung und insbesondere auch der einzelnen Herstellungseinheiten. Bevorzugt handelt es sich bei dieser Steuerungseinrichtung um eine Regeleinrichtung.

Das Bezugszeichen 104 kennzeichnet schematisch eine Entnahmeeinrichtung, welche die spritzgegossenen Kunststoffvorformlinge 10 aus den Herstellungseinheiten 102 entnimmt. Diese Entnahmeeinrichtung kann dabei Bestandteil der oben erwähnten Steuerungseinrichtung sein.

Das Bezugszeichen 106 kennzeichnet eine Kühleinrichtung, insbesondere in Form einer Nachkühleinheit, welche die hergestellten Kunststoffvorformlinge 10 kühlt. Bevorzugt werden die Kunststoffvorformlinge direkt nach deren Herstellung in dieser Kühleinrichtung 106 eingelegt und/oder der Kühleinrichtung zugeführt.

Entlang des Transportpfads der Transporteinrichtung 104 ist eine Inspektionseinrichtung und insbesondere eine erste Inspektionseinrichtung 120 angeordnet, welche die Kunststoffvorformlinge inspiziert. Dabei ist diese erste Inspektionseinrichtung 120 insbesondere dazu geeignet und bestimmt jeden einzelnen Kunststoffvorformlinge zu inspizieren bzw. eine für diesen Kunststoffvorformling charakteristische Eigenschaft zu erfassen.

Wie oben erwähnt, weist die Inspektionseinrichtung insbesondere eine Bildaufnahmeeinrichtung auf, welche zur Aufnahme von Bildern geeignet und bestimmt ist. Das Bezugszeichen 123 kennzeichnet eine Auswerteeinrichtung, welche die von der Bildaufnahmeeinrichtung aufgenommenen Bilder auswertet.

Diese Inspektionseinrichtung und/oder die Auswerteeinrichtung gibt bevorzugt wenigstens einen Wert W1 aus, der für die inspizierten Kunststoffvorformlinge charakteristisch ist. Bevorzugt gibt die Inspektionseinrichtung für jeden inspizierten Kunststoffvorformling einen solchen Wert W1 aus.

Das Bezugszeichen 108 kennzeichnet eine Zuordnungseinrichtung, welche jedem Kunststoffvorformling 10, der inspiziert wurde eine Herstellungseinheit 103, welche diesen Kunststoffvorformling hergestellt hat, zuordnet. Die Steuerungseinrichtung ist vorteilhaft dazu geeignet und bestimmt, die einzelnen Herstellungseinheiten auch in Abhängigkeit von den gemessenen bzw. ausgegebenen Werten der einzelnen Kunststoffvorformlinge zu steuern.

Das Bezugszeichen 105 kennzeichnet eine Transporteinrichtung und insbesondere eine Handlingseinheit, welche die Kunststoffvorformlinge 10 von der Transporteinrichtung 104 übernimmt.

Zusätzlich oder alternativ ist die Zuordnungseinrichtung 108 auch in der Lage, jedem Kunststoffvorformling diejenige Umformungsstation 112 zuzuordnen, welche diesem Kunststoffvorformling zu einem Kunststoffbehältnis umformen wird.

Bevorzugt ist daher die erste Inspektionseinrichtung zwischen der Herstellungseinrichtung und/oder den einzelnen Herstellungseinheiten und der Kühleinrichtung 106 und/oder der Transporteinrichtung 105 angeordnet.

Das Bezugszeichen 121 kennzeichnet eine zweite Inspektionseinrichtung, welche wenigstens einen Wert erfasst, welcher für den jeweils inspizierten Kunststoffvorformling charakteristisch ist. Auch hier kann es sich bevorzugt wieder um einen Wert handeln, der aus einer Gruppe von Werten ausgewählt ist, welche eine Geometrie der Kunststoffvorformlinge, eine Farbe der Kunststoffvorformlinge, eine Feuchte der Kunststoffvorformlinge, einen IV-Wert der Kunststoffvorformling, eine Temperatur der Kunststoffvorformling oder dergleichen enthält.

Bevorzugt werden diese Werte einer übergeordneten Steuerung zur Verfügung gestellt, um Parameter der gesamten Vorrichtung zu steuern.

Das Bezugszeichen 220 kennzeichnet eine weitere Inspektionseinrichtung welche zum Inspizieren der Kunststoffvorformlinge dient.

Es kann weiterhin eine Ausleiteinrichtung vorgesehen sein, welche (insbesondere abhängig von den erwähnten Kennwerten) bewirkt, dass einzelne Kunststoffvorformlinge nicht an die Umformungseinrichtung 112 übergeben werden. Das Bezugszeichen 230 kennzeichnet eine Steuerungseinrichtung zum Steuern der Umformungseinrichtung. Dabei kann diese Steuerungseinrichtung die Umformungseinrichtung bevorzugt unter Berücksichtigung der Ergebnisse der einzelnen Inspektionen der Kunststoffvorformlinge und/oder unter Berücksichtigung der einzelnen ausgegebenen Werte steuern und bevorzugt regeln. Das Bezugszeichen 240 kennzeichnet eine weitere optionale Inspektionseinrichtung, die insbesondere zum Inspizieren der gefertigten Behältnisse geeignet und bestimmt ist.

Weiterhin kann eine (nicht gezeigte) Lückschließeinrichtung vorgesehen sein, welche durch die Ausleitung einzelner Kunststoffvorformlinge entstehende Lücken wieder schließt.

Das Bezugszeichen 110 kennzeichnet in der Gesamtheit eine Umformungseinrichtung, welche die Kunststoffvorformlinge zu Kunststoffbehältnissen 20 umformt.

Dabei ist bevorzugt zunächst eine Erwärmungseinrichtung 111 vorgesehen, welche die Kunststoffvorformlinge auf eine Temperatur erwärmt, die für eine Umformung und insbesondere eine Expansion zu den Kunststoffbehältnissen 20 geeignet ist.

Die Umformungseinrichtung 110 weist bevorzugt einen drehbaren Träger 114 auf, an dem eine Vielzahl von Umformungsstationen 112 angeordnet ist. Diese Umformungsstationen sind bevorzugt unabhängig voneinander steuerbar.

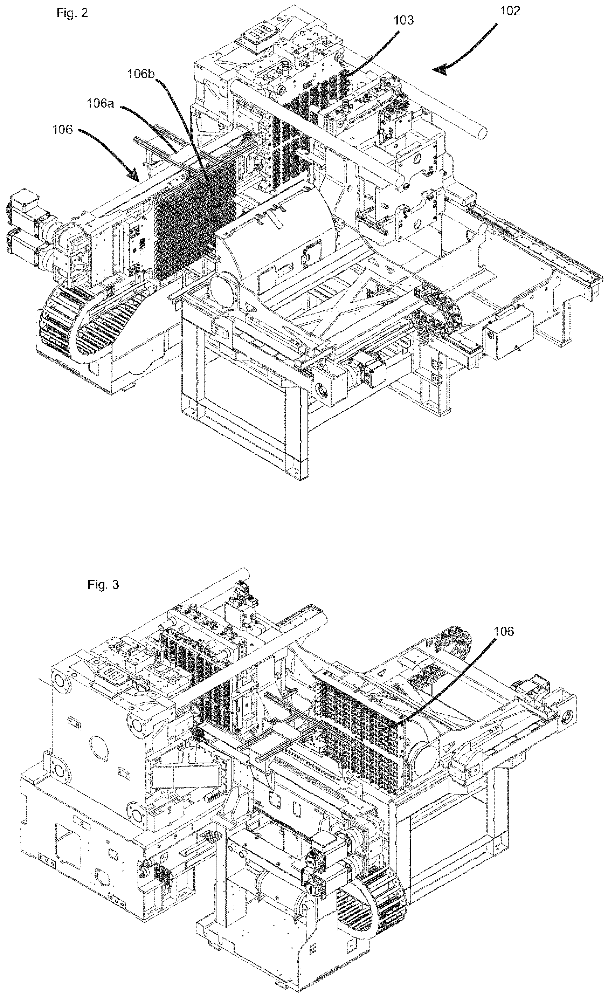

Fig. 2 und Fig. 3 zeigen eine erste Ansicht einer Herstellungseinrichtung 102 zum Herstellen der Kunststoffvorformlinge. Dabei kennzeichnet das Bezugszeichen 103 eine Vielzahl von Herstellungseinheiten, welche jeweils einzelne Kunststoffvorformlinge herstellen.

Das Bezugszeichen 106 kennzeichnet eine Kühleinrichtung zum Kühlen der Kunststoffvorformlinge. Das Bezugszeichen 106a kennzeichnet eine Abnahmeeinrichtung zum Abnehmen der Kunststoffvorformlinge nach dem Herstellungsprozess. Das Bezugszeichen 106b kennzeichnet Halteelemente für die einzelnen Kunststoffvorformlinge.

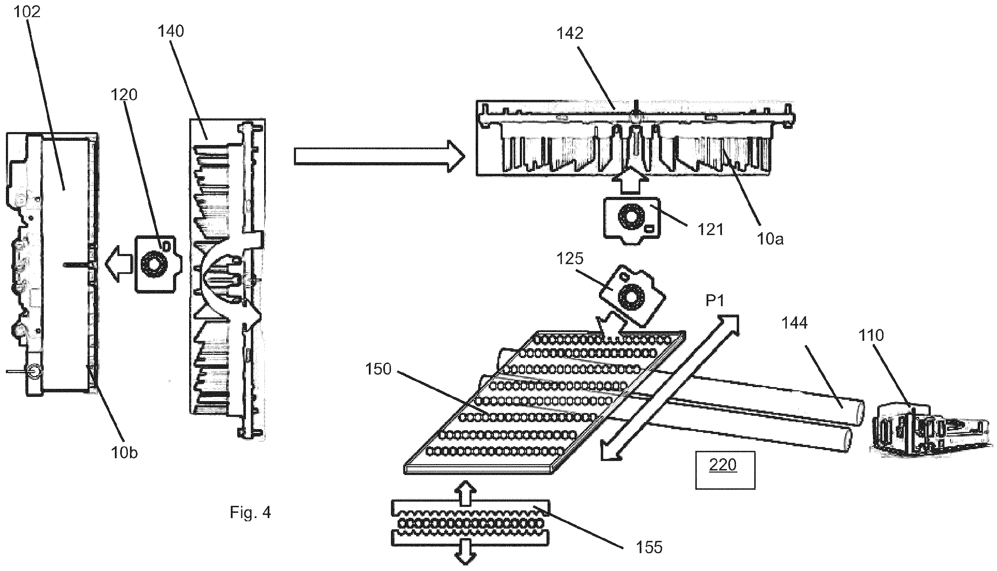

Fig. 4 zeigt eine Darstellung zur Veranschaulichung der erfindungsgemäßen Vorrichtung sowie des erfindungsgemäßen Verfahrens.

Dabei ist die Herstellungseinrichtung 102 vorgesehen, welche eine Vielzahl von (nicht im Detail gezeigten Herstellungseinheiten aufweisen, welche jeweils die Kunststoffvorformlinge herstellen. Man erkennt, dass die Mündungen 10b der einzelnen Kunststoffvorformlinge.

Das Bezugszeichen 120 kennzeichnet die erste Inspektionseinrichtung, welche hier insbesondere ein Bild der Mündungen 10b aufnimmt, wobei die einzelnen Mündungen und damit die einzelnen Kunststoffvorformlinge individualisierbar sind.

Das Bezugszeichen 140 kennzeichnet eine Wendeeinrichtung, welche den Träger mit den daran angeordneten Kunststoffvorformlingen wendet, hier um 90°. Daneben findet in diesem Bereich eine Kühlung der Kunststoffvorformlingen durch eine (hier nicht gezeigte) Kühleinrichtung statt.

Der gewendete Träger 142 wird mit den daran angeordneten Kunststoffvorformlinge transportiert und eine zweite Inspektionseinrichtung 121 nimmt wenigstens ein Bild der Kunststoffvorformlinge, genauer, nun der Grundkörper 10a der Kunststoffvorformlinge.

Das Bezugszeichen 125 kennzeichnet eine dritte Inspektionseinrichtung, welche ebenfalls die in einem Träger angeordneten Kunststoffvorformlinge inspiziert. Bevorzugt findet hier eine Inspektion auf Materialfehler wie etwa sog. BlackSpecs statt.

In dem Bereich des Trägers 142 ist eine Vakuumhalteeinrichtung (nicht gezeigt) vorgesehen, welche bewirkt, dass jeder einzelne Kunststoffvorformling an einem eigenen Träger gehalten wird. Auf diese Weise können fehlerhafte Kunststoffvorformlingen von ordnungsgemäßen Kunststoffvorformlingen getrennt werden.

Bei der in Fig. 4 gezeigten Ausführungsformen werden fehlerhafte Kunststoffvorformlinge zunächst noch an ihren (Vakuum)greifern gehalten, während ordnungsgemäße Kunststoffvorformlinge auf eine weitere Transporteinheit 150 fallen gelassen werden.

Von dieser weiteren Transporteinheit in Form eines Trägers 150 können die Vorformlinge wiederum auf eine weitere Transporteinheit 144 welche hier zwei parallel zueinander angeordnete Rollen, zwischen welchen die Kunststoffvorformlinge 10 geführt werden, fallen gelassen werden. Zu diesem Zweck kann der Träger 150 mit den einzelnen Kunststoffvorformlingen entlang des Pfeils P1 gegenüber der weiteren Transporteinheit verschoben werden.

Genau genommen wird der Träger mit den Kunststoffvorformlingen über der Transporteinheit 144 seitlich verfahren. Zu diesem Zweck können sich an dem Träger, wie unten in Fig. 4 gezeigt Spalte 155 öffnen und die Kunststoffvorformlinge können zwischen die Rollen fallen gelassen werden.

Die fehlerhaften Kunststoffvorformlinge, welche noch mittels Vakuumgreifern an dem Träger 142 gehalten werden, können durch eine selektive Ansteuerung beim zurückfahren des Trägers 142 abgeworfen werden.

## Patentansprüche

1. Vorrichtung (101) zum Herstellen von Kunststoffvorformlingen (10) mit einer Herstellungseinrichtung (102), welche zum Herstellen von Kunststoffvorformlingen (10) geeignet und bestimmt ist wobei die Herstellungseinrichtung (102) eine Vielzahl von Herstellungseinheiten (103) zum Herstellen der Kunststoffvorformlinge aufweist und mit einer Transportvorrichtung (104), welche dazu geeignet und bestimmt ist, die von der Herstellungseinrichtung (102) hergestellten Kunststoffvorformlinge (10) zu transportieren wobei die Vorrichtung (1) eine Steuerungseinrichtung (25) zum Steuern der Herstellungseinrichtung (102) aufweist,
wobei die Vorrichtung (1) eine erste Inspektionseinrichtung (120) aufweist, welche zur Inspektion wenigstens eines Bereichs der von der Herstellungseinrichtung (102) hergestellten Kunststoffvorformlinge (10) geeignet und bestimmt ist, wobei die Inspektionseinrichtung (120) dazu geeignet und bestimmt ist, wenigstens einen Wert (W1) auszugeben, der für eine physikalische Eigenschaft der Kunststoffvorformlinge charakteristisch ist,
**dadurch gekennzeichnet, dass**
die Vorrichtung eine Zuordnungseinrichtung (108) aufweist, welche dazu geeignet ist, jedem inspizierten Kunststoffvorformling (10) diejenige Herstellungseinheit (103) zuzuordnen, welche diesen Kunststoffvorformling (10) hergestellt hat und wobei die Steuerungseinrichtung (25) dazu geeignet und bestimmt ist, die Herstellungseinrichtung (102) und insbesondere die Herstellungseinheiten (103) in Abhängigkeit von diesem Wert (W1) zu steuern.

2. Vorrichtung (101) nach Anspruch 1,
**dadurch gekennzeichnet, dass**
die Herstellungseinheiten (130) jeweils Kavitäten zur Formung der Kunststoffvorformlinge (10) und/oder Formwerkzeuge zur Formung der Kunststoffvorformlinge (10) aufweisen.

3. Vorrichtung (101) nach wenigstens einem der vorangegangenen Ansprüche,
**dadurch gekennzeichnet, dass**
wenigstens ein Parameter der Herstellungseinrichtung (102) und/oder der Herstellungseinheiten (103) steuerbar und insbesondere regelbar ist, wobei dieser Parameter bevorzugt aus einer Gruppe von Parametern ausgewählt ist, welche Nadelverschlusszeiten, Einspritzverzögerung/ -timing, Einspritzprofile, Druckprofile, Nachdruck (insbesondere Druckprofil und Zeit), Kühlzeiten, Drehzahl der Schnecke, Staudruck der Schmelze, Position und Druck der Schließeinheit (z.B. Spritzprägen) sowie Temperaturen von Kavität und/oder einer Düse (ggf. Individuell pro Düse), Hotrunner in einzelnen Zonen, Heizzonen der Plastifizierung und dergleichen enthält.

4. Vorrichtung (101) nach wenigstens einem der vorangegangenen Ansprüche,
**dadurch gekennzeichnet, dass**
die Steuerungseinrichtung (25) zum Steuern der Herstellungseinrichtung eine Regelungseinrichtung ist, welche dazu geeignet und bestimmt ist die Herstellungseinrichtung (102) und insbesondere die Herstellungseinheiten (103) in Abhängigkeit von diesem wenigstens einen Wert (W1) zu regeln.

5. Vorrichtung (101) nach wenigstens einem der vorangegangenen Ansprüche,
**dadurch gekennzeichnet, dass**
die Vorrichtung (1) eine Kühleinrichtung (106) zum Kühlen der von den Herstellungseinheiten hergestellten Kunststoffvorformlinge aufweist und bevorzugt die erste Inspektionseinrichtung (120) zwischen der Herstellungseinrichtung (102) und der Kühleinrichtung (106) angeordnet ist.

6. Vorrichtung (101) nach wenigstens einem der vorangegangenen Ansprüche,
**dadurch gekennzeichnet, dass**
erste Inspektionseinrichtung (120) eine Bildaufnahmeeinrichtung aufweist, welche dazu geeignet und bestimmt ist ein ortsaufgelöstes Bild einer Vielzahl von Kunststoffvorformlingen aufzunehmen, wobei bevorzugt die Bildaufnahmeeinrichtung eine Wärmebildkamera ist.

7. Vorrichtung (101) nach wenigstens einem der vorangegangenen Ansprüche,
**dadurch gekennzeichnet, dass**
die Vorrichtung eine zweite Inspektionseinrichtung (121) aufweist, welche dazu geeignet und bestimmt ist die Kunststoffvorformlinge zu inspizieren und welche bevorzugt zwischen der Kühleinrichtung (106) und der Umformungseinrichtung (130) angeordnet ist wobei bevorzugt wenigstens eine Inspektionseinrichtung und bevorzugt beide Inspektionseinrichtungen (120, 121) dazu geeignet und bestimmt sind wenigstens einen und bevorzugt eine Vielzahl von Werten zu erfassen und/oder auszugeben, welche für physikalische Eigenschaften der Kunststoffvorformlinge charakteristisch sind.

8. Vorrichtung (101) nach dem vorangegangenen Anspruch,
**dadurch gekennzeichnet, dass**
wobei die Vorrichtung (101) eine Zuordnungseinrichtung (108) aufweist, welche dazu geeignet ist, jedem von der zweiten Inspektionseinrichtung (121) inspizierten Kunststoffvorformling diejenige Herstellungseinheit (103) zuzuordnen, welche diesen Kunststoffvorformling hergestellt hat.

9. Vorrichtung (101) nach wenigstens einem der vorangegangenen Ansprüche,
**dadurch gekennzeichnet, dass**
die Vorrichtung (101) eine Wendeeinrichtung aufweist, welche eine Ausrichtung von transportierten Kunststoffvorformlingen (10) ändert.

10. Vorrichtung (101) nach wenigstens einem der vorangegangenen Ansprüche,
**dadurch gekennzeichnet, dass**
die Vorrichtung eine Speichereinrichtung (107) aufweist, in der eine Vielzahl von für die Kunststoffvorformlinge (10) charakteristischen Daten abgelegt ist, wobei bevorzugt eine Vergleichseinrichtung (109) vorgesehen ist, welche diese Daten mit von der wenigstens einen Inspektionseinrichtung erfassten Daten vergleicht.

11. Vorrichtung (101) nach wenigstens einem der vorangegangenen Ansprüche,
**dadurch gekennzeichnet, dass**
die Vorrichtung (101) eine Erwärmungseinrichtung (111) zum Erwärmen der von der Herstellungseinrichtung (102) hergestellten Kunststoffvorformlingen (10) aufweist.

12. Vorrichtung (101) nach wenigstens einem der vorangegangenen Ansprüche,
**dadurch gekennzeichnet, dass**
die Vorrichtung eine Ausleiteinrichtung aufweist, welche dazu geeignet und bestimmt ist, einzelne Kunststoffvorformlinge (10) aus dem Transportpfad zwischen der Herstellungseinrichtung (102) und der Umformungseinrichtung (110) auszuschleusen.

13. Anordnung zum Herstellen von Kunststoffbehältnissen mit einer Vorrichtung (101) nach wenigstens einem der vorangegangen Ansprüche und einer Umformungseinrichtung (110), welche dazu geeignet und bestimmt ist, die hergestellten Kunststoffvorformlinge zu Kunststoffbehältnissen umzuformen, wobei weiterhin die Transporteinrichtung dazu geeignet und bestimmt ist, die Kunststoffvorformlinge (10) von der Herstellungseinrichtung (102) zu der Umformungseinrichtung (110) zu transportieren.

14. Verfahren zum Herstellen von Kunststoffvorformlingen (10) wobei eine Herstellungseinrichtung (102) Kunststoffvorformlinge (10) herstellt wobei die Herstellungseinrichtung (102) eine Vielzahl von Herstellungseinheiten (103) aufweist, welche die Kunststoffvorformlinge herstellen und wobei eine Transportvorrichtung (104, 105, 130) die von der Herstellungseinrichtung (102) hergestellten Kunststoffvorformlinge (10) transportiert und eine Steuerungseinrichtung (25) die Herstellungseinrichtung (102) steuert,
wobei eine erste Inspektionseinrichtung (120) vorgesehen ist, welche wenigstens einen Bereich der von der Herstellungseinrichtung (102) hergestellten Kunststoffvorformlinge inspiziert, wobei die Inspektionseinrichtung (120) wenigstens einen Wert (W1) ausgibt, der für eine physikalische Eigenschaft der Kunststoffvorformlinge (10) charakteristisch ist **dadurch gekennzeichnet, dass**
die Vorrichtung eine Zuordnungseinrichtung (108) aufweist, welche jedem inspizierten Kunststoffvorformling (10) diejenige Herstellungseinheit (103) zuordnet, welche diesen Kunststoffvorformling (10) hergestellt hat und wobei die Steuerungseinrichtung die Herstellungseinrichtung (102) und insbesondere die Herstellungseinheiten (103) in Abhängigkeit von diesem Wert steuert.

## Claims

1. An apparatus (101) for producing plastic preforms (10), comprising a production device (102) that is suitable and intended for producing plastic preforms (10), wherein the production device (102) comprises a plurality of production units (103) for producing the plastic preforms, and a transport device (104) suitable and intended for transporting the plastic preforms (10) produced by the production device (102), wherein the apparatus (1) comprises a control device (25) for controlling the production device (102),
wherein
the apparatus (1) comprises a first inspection device (120) suitable and intended for inspecting at least one region of the plastic preforms (10) produced by the production device (102), wherein the inspection device (120) is suitable and intended to output at least one value (W1) that is characteristic of a physical property of the plastic preforms,
**characterized in that**
the apparatus comprises an assignment device (108) that is suitable for assigning to each inspected plastic preform (10) the manufacturing unit (103) that produced that plastic preform (10), and wherein the control device (25) is suitable and intended to control the production device (102) and, in particular, the production units (103) based on this value (W1).

2. The apparatus (101) according to claim 1,
**characterized in that**
the production units (130) each comprise cavities for molding the plastic preforms (10) and/or molding tools for molding the plastic preforms (10).

3. The apparatus (101) according to at least one of the preceding claims,
**characterized in that**
at least one parameter of the production device (102) and/or the production units (103) is controllable and, in particular, adjustable, wherein this parameter is preferably selected from a group of parameters comprising needle valve closing times, injection delay/timing, injection profiles, pressure profiles, holding pressure (in particular pressure profile and time), cooling times, rotational speed of the screw, melt back pressure, position and pressure of the closing unit (e.g., injection molding), as well as temperatures of the cavity and/or a nozzle (if applicable, individually per nozzle), hot runners in individual zones, heating zones of the plasticizing section, and the like.

4. The apparatus (101) according to at least one of the preceding claims,
**characterized in that**
the control device (25) for controlling the production device is a regulation device that is suitable and intended to regulate the production device (102) and, in particular, the production units (103) depending on this at least one value (W1).

5. The apparatus(101) according to at least one of the preceding claims,
**characterized in that**
the apparatus (1) comprises a cooling device (106) for cooling the plastic preforms produced by the production units, and the first inspection device (120) is preferably arranged between the production device (102) and the cooling device (106).

6. The apparatus (101) according to at least one of the preceding claims,
**characterized in that**
the first inspection device (120) comprises an image capture device that is suitable and intended for capturing a spatially resolved image of a plurality of plastic preforms, wherein the image capture device is preferably a thermal imaging camera.

7. The apparatus (101) according to at least one of the preceding claims,
**characterized in that**
the apparatus comprises a second inspection device (121) that is suitable and intended for inspecting the plastic preforms and is preferably arranged between the cooling device (106) and the forming device (130), wherein preferably at least one inspection device and preferably both inspection devices (120, 121) are suitable and intended to detect and/or output at least one and preferably a plurality of values that are characteristic of the physical properties of the plastic preforms.

8. The apparatus (101) according to the preceding claim,
**characterized in that**
wherein the apparatus (101) comprises an assignment device (108) that is suitable to assign to each plastic preform inspected by the second inspection device (121) the production unit (103) that produced that plastic preform.

9. The apparatus (101) according to at least one of the preceding claims,
**characterized in that**
the apparatus (101) comprises a turning device that changes the orientation of transported plastic preforms (10).

10. The apparatus (101) according to at least one of the preceding claims,
**characterized in that**
the apparatus comprises a storage device (107) in which a plurality of data characteristic of the plastic preforms (10) are stored, wherein a comparison device (109) is preferably provided, which compares this data with data detected by the at least one inspection unit.

11. The apparatus (101) according to at least one of the preceding claims,
**characterized in that**
the apparatus (101) comprises a heating device (111) for heating the plastic preforms (10) produced by the production device (102).

12. The apparatus(101) according to at least one of the preceding claims,
**characterized in that**
the apparatus comprises a discharge device that is suitable and intended for discharging individual plastic preforms (10) from the transport path between the production device (102) and the forming device (110).

13. An arrangement for producing plastic containers, comprising a apparatus (101) according to at least one of the preceding claims and a forming device (110), which is suitable and intended for forming the produced plastic preforms into plastic containers, wherein the transport device is further suitable and intended for transporting the plastic preforms (10) from the production device (102) to the forming device (110).

14. A method for producing plastic preforms (10), wherein a production device (102) produces plastic preforms (10), wherein the production device (102) comprises a plurality of production units (103) that produce the plastic preforms, and wherein a transport device (104, 105, 130) transports the plastic preforms (10) produced by the production device (102), and a control device (25) controls the production device (102),
wherein
a first inspection device (120) is provided, which inspects at least one region of the plastic preforms produced by the production device (102), wherein the inspection device (120) outputs at least one value (W1) that is characteristic of a physical property of the plastic preforms (10),
**characterized in that**
the apparatus comprises an assignment device (108) that assigns to each inspected plastic preform (10) the production unit (103) that produced that plastic preform (10), and wherein the control devices controls the production device (102) and, in particular, the production units (103) based on this value.

## Revendications

1. Dispositif (101) pour la fabrication de préformes en plastique (10) avec un appareil de fabrication (102), qui est adapté pour et destiné à la fabrication de préformes en plastique (10), dans lequel l'appareil de fabrication (102) présente une pluralité d'unités de fabrication (103) pour la fabrication des préformes en plastique et avec un dispositif de transport (104), qui est adapté pour et destiné à transporter les préformes en plastique (10) fabriquées par l'appareil de fabrication (102), dans lequel le dispositif (1) présente un appareil de commande (25) pour commander l'appareil de fabrication (102), dans lequel le dispositif (1) présente un premier appareil d'inspection (120) qui est adapté pour et destiné à inspecter au moins une zone des préformes en plastique (10) fabriquées par l'appareil de fabrication (102), dans lequel l'appareil d'inspection (120) est adapté pour et destiné à délivrer au moins une valeur (W1) qui est caractéristique d'une propriété physique des préformes en plastique,
**caractérisé en ce que**
le dispositif présente un appareil d'affectation (108) qui est adapté pour affecter à chaque préforme en plastique (10) inspectée l'unité de fabrication (103) qui a fabriqué cette préforme en plastique (10) et dans lequel l'appareil de commande (25) est adapté pour et destiné à commander l'appareil de fabrication (102) et en particulier les unités de fabrication (103) en fonction de cette valeur (W1).

2. Dispositif (101) selon la revendication 1,
**caractérisé en ce que**
les unités de fabrication (130) présentent respectivement des cavités pour le formage des préformes en plastique (10) et/ou des outils de formage pour le formage des préformes en plastique (10).

3. Dispositif (101) selon au moins l'une quelconque des revendications précédentes,
**caractérisé en ce que**
au moins un paramètre de l'appareil de fabrication (102) et/ou des unités de fabrication (103) peut être commandé et en particulier régulé, dans lequel ce paramètre est choisi de préférence dans un groupe de paramètres qui contient les temps de fermeture par aiguille, retard/moment d'injection, profils d'injection, profils de pression, post-pression (en particulier profil de pression et temps), temps de refroidissement, vitesse de rotation de la vis, pression dynamique de la masse fondue, position et pression de l'unité de fermeture (par ex. moulage par injection-compression) ainsi que températures de la cavité et/ou d'une buse (le cas échéant individuellement par buse), canaux chauds dans des zones individuelles, zones de chauffage de la plastification et similaires.

4. Dispositif (101) selon au moins l'une quelconque des revendications précédentes,
**caractérisé en ce que**
l'appareil de commande (25) pour commander l'appareil de fabrication est un appareil de régulation qui est adapté pour et destiné à réguler l'appareil de fabrication (102) et en particulier les unités de fabrication (103) en fonction de cette au moins une valeur (W1).

5. Dispositif (101) selon au moins l'une quelconque des revendications précédentes,
**caractérisé en ce que**
le dispositif (1) présente un appareil de refroidissement (106) pour refroidir les préformes en plastique fabriquées par les unités de fabrication et le premier appareil d'inspection (120) est de préférence disposé entre l'appareil de fabrication (102) et l'appareil de refroidissement (106).

6. Dispositif (101) selon au moins l'une quelconque des revendications précédentes,
**caractérisé en ce que**
le premier appareil d'inspection (120) présente un appareil d'acquisition d'image qui est adapté pour et destiné à acquérir une image à résolution spatiale d'une pluralité de préformes en plastique, dans lequel l'appareil d'acquisition d'image est de préférence une caméra thermique.

7. Dispositif (101) selon au moins l'une quelconque des revendications précédentes,
**caractérisé en ce que**
le dispositif présente un second appareil d'inspection (121), qui est adapté pour et destiné à inspecter les préformes en plastique et qui est disposé de préférence entre l'appareil de refroidissement (106) et l'appareil de façonnage (130), dans lequel de préférence au moins un appareil d'inspection et de préférence les deux appareils d'inspection (120, 121) sont adaptés pour et destinés à enregistrer et/ou délivrer au moins une et de préférence une pluralité de valeurs, qui sont caractéristiques des propriétés physiques des préformes en plastique.

8. Dispositif (101) selon la revendication précédente,
**caractérisé en ce que**
dans lequel le dispositif (101) présente un appareil d'affectation (108) qui est adapté pour affecter à chaque préforme en plastique inspectée par le second appareil d'inspection (121) l'unité de fabrication (103) qui a fabriqué cette préforme en plastique.

9. Dispositif (101) selon au moins l'une quelconque des revendications précédentes,
**caractérisé en ce que**
le dispositif (101) présente un appareil de retournement qui modifie une orientation des préformes en plastique (10) transportées.

10. Dispositif (101) selon au moins l'une quelconque des revendications précédentes,
**caractérisé en ce que**
le dispositif présente un appareil de stockage (107) dans lequel est déposée une pluralité de données caractéristiques des préformes en plastique (10), dans lequel un appareil de comparaison (109) est prévu de préférence, qui compare ces données avec des données enregistrées par l'au moins un appareil d'inspection.

11. Dispositif (101) selon au moins l'une quelconque des revendications précédentes,
**caractérisé en ce que**
le dispositif (101) présente un appareil de chauffage (111) pour chauffer les préformes en plastique (10) fabriquées par l'appareil de fabrication (102).

12. Dispositif (101) selon au moins l'une quelconque des revendications précédentes,
**caractérisé en ce que**
le dispositif présente un appareil d'évacuation qui est adapté pour et destiné à évacuer des préformes en plastique (10) individuelles du trajet de transport entre l'appareil de fabrication (102) et l'appareil de façonnage (110).

13. Ensemble de fabrication de récipients en plastique avec un dispositif (101) selon au moins l'une des revendications précédentes et un appareil de façonnage (110) qui est adapté pour et destiné à façonner les préformes en plastique fabriquées en récipients en plastique, dans lequel l'appareil de transport est en outre adapté pour et destiné à transporter les préformes en plastique (10) de l'appareil de fabrication (102) à l'appareil de façonnage (110).

14. Procédé de fabrication de préformes en plastique (10), dans lequel un appareil de fabrication (102) fabrique des préformes en plastique (10), dans lequel l'appareil de fabrication (102) présente une pluralité d'unités de fabrication (103) qui fabriquent les préformes en plastique et dans lequel un dispositif de transport (104, 105, 130) transporte les préformes en plastique (10) fabriquées par l'appareil de fabrication (102) et un appareil de commande (25) commande l'appareil de fabrication (102), dans lequel un premier appareil d'inspection (120) est prévu, qui inspecte au moins une zone des préformes en plastique fabriquées par l'appareil de fabrication (102), dans lequel l'appareil d'inspection (120) délivre au moins une valeur (W1) qui est caractéristique d'une propriété physique des préformes en plastique (10), **caractérisé en ce que** le dispositif présente un appareil d'affectation (108) qui affecte à chaque préforme en plastique (10) inspectée l'unité de fabrication (103) qui a fabriqué cette préforme en plastique (10) et dans lequel l'appareil de commande commande l'appareil de fabrication (102) et en particulier les unités de fabrication (103) en fonction de cette valeur.
